Europäisches Patentamt

(19) European Patent Office

Office européen des brevets

(11) Veröffentlichungsnummer: **0 034 220**
**B1**

(12) **EUROPÄISCHE PATENTSCHRIFT**

(45) Veröffentlichungstag der Patentschrift:
**13.02.85**

(51) Int. Cl.⁴: **B 60 G 15/00,** F 16 F 9/06

(21) Anmeldenummer: **80108085.4**

(22) Anmeldetag: **20.12.80**

(54) **Führungskräfte aufnehmender Zweirohr-Schwingungsdämpfer, insbesondere für Kraftfahrzeuge mit an Federbeinen aufgehängten Fahrzeugrädern.**

(30) Priorität: **16.02.80 DE 3005830**

(43) Veröffentlichungstag der Anmeldung:
**26.08.81 Patentblatt 81/34**

(45) Bekanntmachung des Hinweises auf die Patenterteilung:
**13.02.85 Patentblatt 85/7**

(84) Benannte Vertragsstaaten:
**FR GB IT**

(56) Entgegenhaltungen:
**DE - C - 894 965**
**DE - U - 7 606 640**
**US - A - 3 098 546**

(73) Patentinhaber: **Boge GmbH, Bogestrasse 50,
D-5208 Eitorf/Sieg (DE)**

(72) Erfinder: **Schmidt, Rudolf, Ulmenweg 9,
D-5208 Eitorf/Sieg (DE)**

BUNDESDRUCKEREI BERLIN

**Beschreibung**

Die Erfindung bezieht sich auf einen Führungskräfte aufnehmenden Zweirohr-Schwingungsdämpfer, insbesondere für Kraftfahrzeuge mit an Federbeinen aufgehängten Fahrzeugrädern, bestehend aus einem Gehäuse, welches durch einen Boden und einen von einer Kolbenstange durchdrungenen und ein Lager für die Kolbenstange aufweisenden Deckel abgeschlossen ist, einem ölgefüllten, im Bereich des Bodens Öffnungen aufweisenden Arbeitszylinder, einer den Arbeitszylinder abschließenden, von der Kolbenstange durchdrungenen und dieser gegenüber abgedichteten Zwischenwand, einem die Kolbenstange umgebenden, zwischen dem Deckel und der Zwischenwand angeordneten Stützrohr und einem in dem Arbeitszylinder längsverschieblichen, am Ende der Kolbenstange befestigten Arbeitskolben, der den Arbeitszylinder in einen deckelseitigen und einen bodenseitigen Arbeitsraum teilt und Dämpfungskräfte im Arbeitszylinder erzeugt, wobei zwischen dem Arbeitszylinder und dem Stützrohr einerseits und dem Gehäuse andererseits ein mindestens vom Boden bis zur Zwischenwand mit Öl und darüber mit Gas gefüllter Ausgleichsraum gebildet ist.

Ein Schwingungsdämpfer der vorstehend beschriebenen Gattung, welcher sich besonders für eine Gasdruckfüllung eignet, ist beispielsweise aus dem DE-GM 7 606 640 bekannt. Infolge der bei derartigen Schwingungsdämpfern stark dimensionierten Kolbenstange finden diese mit Vorteil als radführende Federbeine Verwendung.

Derartige Federbeine besitzen bekanntlich zusätzliche Tragfedern aus Stahl. Es hat sich jedoch in der Praxis gezeigt, daß diese Tragfedern aus fertigungstechnischen Gründen in nachteiliger Weise relativ große Kraft- und Bautoleranzen haben. Will man jedoch trotzdem das Ziel erreichen, die linke und die rechte Seite von mit derartigen Federbeinen ausgerüsteten Fahrzeugen wenigstens nahezu auf die gleiche Niveauhöhe zu bringen, so müssen die Tragfedern bei der Serienfertigung in kostspieliger Weise klassifiziert, gekennzeichnet und besonders gelagert werden.

Der vorliegenden Erfindung liegt die Aufgabe zugrunde, einen einfachen und wirksamen Führungskräfte · aufnehmenden Zweirohr-Schwingungsdämpfer zu schaffen, welcher die Nachteile der bekannten Schwingungsdämpfer vermeidet und insbesondere die bisher erforderliche Klassifizierung, Kennzeichnung und besondere Lagerung der Tragfedern in Fortfall bringt.

Diese Aufgabe wird beim Schwingungsdämpfer der eingangs erwähnten Gattung erfindungsgemäß dadurch gelöst, daß die Kolbenstange in an sich bekannter Weise hohl ausgebildet ist und im Bereich ihres bodenseitigen Endes ein von außen durch den Kolbenstangen-Hohlraum hindurch zum Öffnen betätigbares Ventil vorgesehen ist, welches einen Strömungsweg zwischen dem Kolbenstangen-Hohlraum und einem der beiden Arbeitsräume verschließt. Dabei kann mit Vorteil das Ventil zum Ablassen von Öl in den Kolbenstangen-Hohlraum mittels eines Montagestabs oder dergleichen betätigbar sein. Es ist jedoch ebenfalls vorteilhaft, wenn das Ventil zum Befüllen mit Druckgas durch den Kolbenstangen-Hohlraum durch das Druckgas selbst betätigbar ist, wobei am deckelseitigen Ende der Kolbenstange ein Druckgasanschluß angeordnet ist.

Die Erfindung löst die gestellte Aufgabe mit besonders einfachen Mitteln. Es wird lediglich im Schwingungsdämpfer ein durch die hohle Kolbenstange hindurch betätigbares Ventil in einem Strömungsweg zwischen dem Arbeitsraum und dem Kolbenstangen-Hohlraum angeordnet. Beim Einbau der Federbeine in das Fahrzeug braucht dann nur durch Betätigung dieses Ventils eine Niveaueinstellung von außen vorgenommen werden. Hierdurch wird es ermöglicht, daß sämtliche Tragfedern mit unterschiedlichen Kraft- und Bautoleranzen ohne jegliche Klassifizierung verwendet werden können. Das erfindungsgemäße Ventil zur Niveaueinstellung ermöglicht diese Einstellung grundsätzlich auf zwei verschiedene Arten. Entweder besitzt der Schwingungsdämpfer bereits vor der Montage in das Fahrzeug eine Gasdruckfüllung und die benötigte Niveauhöhe wird nach dem Einbau des Dämpfers in das Fahrzeug durch eine durch Öffnen des Ventils mittels eines entsprechenden Montagestabs herbeigeführte Drucksenkung reguliert. Oder der Schwingungsdämpfer besitzt im angelieferten Zustand vor der Montage keine Druckgasfüllung und wird bei der Montage zur Erzielung der gewünschten Niveaulage mit einer entsprechenden Druckgasfüllung versehen, wozu das Ventil pneumatisch durch das einzufüllende Druckgas selbst geöffnet wird. Ferner hat die an sich bekannte hohle Ausbildung der Kolbenstange den Vorteil einer großen Material- und Gewichtseinsparung.

Gemäß einer besonders bevorzugten Ausführungsform ist das Ventil einem am bodenseitigen Ende der Kolbenstange in deren Hohlraum befestigten kolbentragenden Zapfen mit Bezug auf das bodenseitige Ende vorgeschaltet.

Dabei umfaßt das Ventil mit Vorteil eine mit einer mittigen Ventilöffnung versehene, vorzugsweise an ihrem Umfang gegen die Kolbenstangen-Wandung abgedichtete, Scheibe, welche zwischen der benachbarten Stirnseite des kolbentragenden Zapfens einerseits und einer schrägen Schulter der Kolbenstangen-Wandung andererseits fest eingespannt ist, und die mittige Ventilöffnung ist von einem vorgespannten Ventilkörper durchsetzt.

Mit Vorteil weist der Ventilkörper an seinem dem Boden zugewandten Ende eine in eine Ausnehmung des kolbentragenden Zapfens hineinragende Schulter auf, die unter Zwischenschaltung einer Dichtung gegen die benachbarte Stirnseite der Scheibe anliegt, und das andere Ende des Ventilkörpers weist eine zur Scheibe hingerichtete Schulter zur Abstützung einer Druckfeder auf, die mit ihrem anderen Ende gegen die benachbarte Stirnseite der Scheibe anliegt.

Ein Ventil mit den vorstehend beschriebenen Erfindungsmerkmalen hat bei einfachem Aufbau und einfacher Funktionsweise eine hohe Funktionssicherheit und Lebensdauer. Das Ventil nach der Erfindung hat im übrigen keinen zusätzlichen Raumbedarf, zumal es innerhalb des ohnehin vorhandenen Kolbenstangen-Hohlraums untergebracht ist.

Die Druckfeder zwischen Ventilkörper und Scheibe ist vorteilhafterweise als kegelstumpfförmige Schraubenfeder ausgebildet, deren größere Basis gegen die benachbarte Stirnseite der Scheibe anliegt. Hierdurch ergibt sich auch hinsichtlich der Federanordnung eine optimale Funktionssicherheit, wobei die Feder aufgrund ihrer kegelstumpfförmigen Gestalt auch nicht den den Ventilkörper umgebenden Durchströmungskanal in der Scheibe versperrt.

Die Ausnehmung des kolbentragenden Zapfens steht zur Bildung des Strömungsweges zwischen Kolbenstangen-Hohlraum und Arbeitszylinder mit Vorteil über einen seitlichen Durchbruch mit dem deckelseitigen Arbeitsraum in offener Verbindung. Die Ausnehmung des kolbentragenden Zapfens kann jedoch auch gemäß einer anderen ebenfalls vorteilhaften Ausführungsform über einen zentralen Durchbruch mit dem bodenseitigen Arbeitsraum in offener Verbindung stehen.

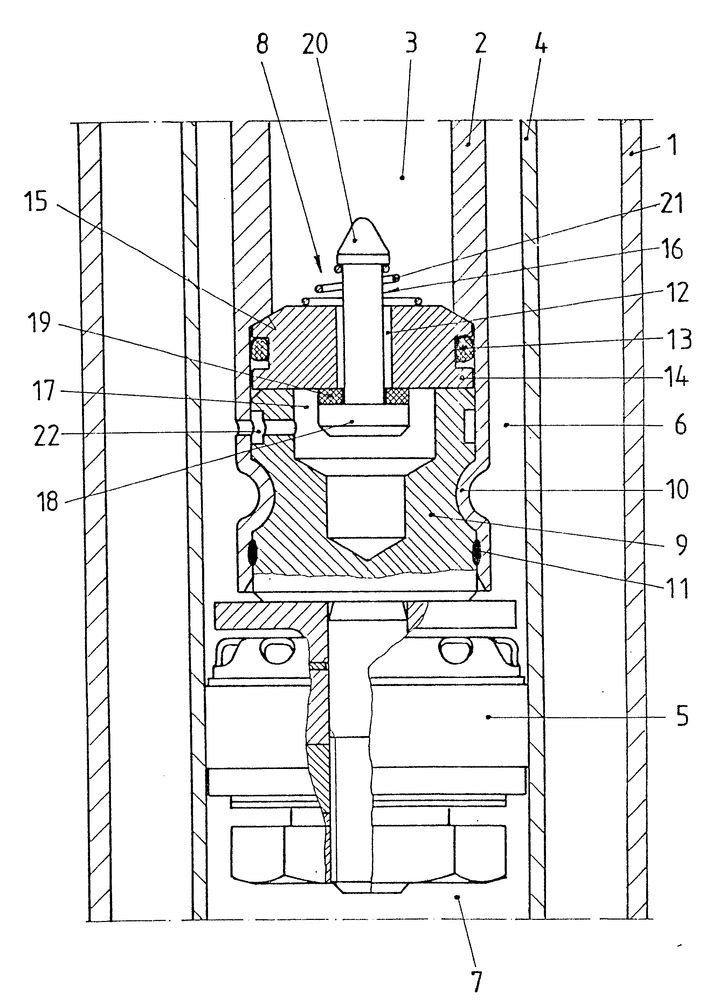

Die vorliegende Erfindung wird nachstehend anhand eines in der Zeichnung schematisch dargestellten Ausführungsbeispiels näher veranschaulicht. Die Zeichnung enthält ausschnittsweise einen Längsschnitt durch einen erfindungsgemäßen Zweirohr-Schwingungsdämpfer im Bereich des Kolbenstangenendes.

Der Gesamtaufbau des Schwingungsdämpfers entspricht grundsätzlich beispielsweise dem im DE-GM 7 606 640 dargestellten Schwingungsdämpfer. Demnach umfaßt der Schwingungsdämpfer nach der vorliegenden Erfindung ein Gehäuse 1, welches vielfach auch als Mantelrohr bezeichnet wird und durch einen nicht dargestellten Boden sowie einen ebenfalls nicht gezeigten, von einer Kolbenstange 2 durchdrungenen und ein Lager für diese aufweisenden Deckel abgeschlossen ist. Die Kolbenstange 2 ist jedoch im Zusammenhang mit der vorliegenden Erfindung wie ersichtlich hohl ausgebildet. Der Kolbenstangen-Hohlraum ist mit 3 bezeichnet.

Der Schwingungsdämpfer besitzt ferner einen ölgefüllten Arbeitszylinder 4. Am Ende der Kolbenstange 2 ist ein im Arbeitszylinder 4 längsverschieblicher Arbeitskolben 5 befestigt, der den Arbeitszylinder 4 in je einen deckelseitigen 6 und bodenseitigen 7 Arbeitsraum teilt und Dämpfungskräfte im Arbeitszylinder 4 erzeugt.

Im übrigen wird bezüglich des in der Zeichnung ohnehin nicht dargestellten sonstigen grundsätzlichen Aufbaus des erfindungsgemäßen Zweirohr-Schwingungsdämpfers zur Vermeidung von Wiederholungen auf die eingangs vorgenommene Beschreibung dieses verwiesen. Es sei lediglich nochmals hervorgehoben, daß es sich bei dem vorliegenden Schwingungsdämpfer um einen sogenannten Gasdruck-Zweirohr-Schwingungsdämpfer handelt.

Erfindungsgemäß ist im Bereich des bodenseitigen Endes der Kolbenstange 2 ein von außen durch den Kolbenstangen-Hohlraum 3 hindurch zum Öffnen betätigbares generell mit 8 bezeichnetes Ventil vorgesehen, welches einen Strömungsweg zwischen dem Kolbenstangen-Hohlraum 3 und einem 6 der beiden Arbeitsräume verschließt. Das Ventil 8 ist einem am bodenseitigen Ende der Kolbenstange 2 in deren Hohlraum 3 befestigten kolbentragenden Zapfen 9 mit Bezug auf das bodenseitige Ende vorgeschaltet. Der kolbentragende Zapfen 9 ist mit dem unteren Kolbenstangenende beispielsweise durch eine Einsickung 10 kraftschlüssig verbunden. Zur Verdrehsicherung ist in üblicher Weise eine zusätzliche Punktschweißung 11 vorgesehen.

Das Ventil 8 umfaßt im einzelnen eine mit einer mittigen Ventilöffnung 12 versehene, an ihrem Umfang gegen die Kolbenstangen-Wandung mittels einer Dichtung 13 abgedichtete Scheibe 14. Die Scheibe 14 ist zwischen der benachbarten Stirnseite des kolbentragenden Zapfens 9 einerseits und einer schrägen Schulter 15 der Kolbenstangen-Wandung andererseits fest eingespannt. Die mittige Ventilöffnung 12 ist von einem vorgespannten generell mit 16 bezeichneten Ventilkörper durchsetzt.

Im einzelnen weist der Ventilkörper 16 an seinem dem Boden zugewandten Ende eine in eine Ausnehmung 17 des kolbentragenden Zapfens 9 hineinragende Schulter 18 auf, die unter Zwischenschaltung einer Dichtung 19 gegen die benachbarte Stirnseite der Scheibe 14 anliegt. Das andere, mit 20 gekennzeichnete Ende des Ventilkörpers 16 weist eine zur Scheibe 14 hingerichtete Schulter zur Abstützung einer Druckfeder 21 auf. Die Druckfeder 21 liegt mit ihrem gegenüberliegenden Ende gegen die benachbarte Stirnseite der Scheibe 14 an. Im übrigen ist die Druckfeder 14 als kegelstumpfförmige Schraubenfeder ausgebildet, deren größere Basis gegen die benachbarte Stirnseite der Scheibe 14 anliegt.

Die Ausnehmung 17 des kolbentragenden Zapfens 9 steht über einen seitlichen Durchbruch 22 mit dem deckelseitigen Arbeitsraum 6 in offener Verbindung. Es versteht sich, daß beim Öffnen des Ventils 8, d. h. beim Herunterdrücken des Ventilkörpers 16 durch den Kolbenstangen-Hohlraum 3 hindurch ein offener Strömungsweg zwischen dem deckelseitigen Arbeitsraum 6 einerseits und dem Kolbenstangen-Hohlraum 3 andererseits gebildet ist.

Es ist nun einerseits möglich, das Ventil 8 manuell beispielsweise mittels eines am Ventilkörperende 20 angreifenden Montagestabs zu öffnen, um zum Zwecke der Niveauabsenkung des Schwingungsdämpfers eine entsprechende Menge Öl vom Arbeitsraum 6 in den Kolbenstangen-Hohlraum 3 abzulassen.

Andererseits ist das Ventil 8 zum Befüllen des Schwingungsdämpfers mit Druckgas durch den Kolbenstangen-Hohlraum 3 hindurch durch das Druckgas selbst betätigbar, indem das Druckgas den Ventilkörper 16 nach unten verschiebt. Hierzu ist am nicht gezeigten deckelseitigen Ende der Kolbenstange 2 ein Druckgasanschluß angeordnet. Auf diese Weise kann also zum Zwecke des Erhöhens der Niveaulage des Schwingungsdämpfers mit einfachen Mitteln Druckgas in diesen eingeführt werden.

**Patentansprüche**

1. Führungskräfte aufnehmender Zweirohr-Schwingungsdämpfer, insbesondere für Kraftfahrzeuge mit an Federbeiden aufgehängten Fahrzeugrädern, bestehend aus einem Gehäuse, welches durch einen Boden und einen von einer Kolbenstange durchdrungenen und ein Lager für die Kolbenstange aufweisenden Deckel abgeschlossen ist, einem ölgefüllten, im Bereich des Bodens Öffnungen aufweisenden Arbeitszylinder, einer den Arbeitszylinder abschließenden, von der Kolbenstange durchdrungenen und dieser gegenüber abgedichteten Zwischenwand, einem die Kolbenstange umgebenden, zwischen dem Deckel und der Zwischenwand angeordneten Stützrohr und einem in dem Arbeitszylinder längsverschieblichen, am Ende der Kolbenstange befestigten Arbeitskolben, der den Arbeitszylinder in einen deckelseitigen und einen bodenseitigen Arbeitsraum teilt und Dämpfungskräfte im Arbeitszylinder erzeugt, wobei zwischen dem Arbeitszylinder und dem Stützrohr einerseits und dem Gehäuse andererseits ein mindestens vom Boden bis zur Zwischenwand mit Öl und darüber mit Gas gefüllter Ausgleichsraum gebildet ist, dadurch gekennzeichnet, daß die Kolbenstange (2) in an sich bekannter Weise hohl ausgebildet ist und im Bereich ihres bodenseitigen Endes ein von außen durch den Kolbenstangen-Hohlraum (3) hindurch zum Öffnen betätigbares Ventil (8) vorgesehen ist, welches einen Strömungsweg zwischen dem Kolbenstangen-Hohlraum (3) und einem der beiden Arbeitsräume (6, 7) verschließt.

2. Schwingungsdämpfer nach Anspruch 1, dadurch gekennzeichnet, daß das Ventil (8) zum Ablassen von Öl in den Kolbenstangen-Hohlraum (3) mittels eines Montagestabs oder dergleichen betätigbar ist.

3. Schwingungsdämpfer nach Anspruch 1 oder 2, dadurch gekennzeichnet, daß das Ventil (8) zum Befüllen mit Druckgas durch den Kolbenstangen-Hohlraum (3) durch das Druckgas selbst betätigbar ist, wobei am deckelseitigen Ende der Kolbenstange (2) ein Druckgasanschluß angeordnet ist.

4. Schwingungsdämpfer nach einem der Ansprüche 1 bis 3, dadurch gekennzeichnet, daß das Ventil (8) einem am bodenseitigen Ende der Kolbenstange (2) in deren Hohlraum (3) befestigten kolbentragenden Zapfen (9) mit Bezug auf das bodenseitige Ende vorgeschaltet ist.

5. Schwingungsdämpfer nach Anspruch 4, dadurch gekennzeichnet, daß das Ventil (8) eine mit einer mittigen Ventilöffnung (12) versehene, vorzugsweise an ihrem Umfang gegen die Kolbenstangen-Wandung abgedichtete, Scheibe (14) umfaßt, welche zwischen der benachbarten Stirnseite des kolbentragenden Zapfens (9) einerseits und einer schrägen Schulter (15) der Kolbenstangen-Wandung andererseits fest eingespannt ist, und die mittige Ventilöffnung (12) von einem vorgespannten Ventilkörper (16) durchsetzt ist.

6. Schwingungsdämpfer nach Anspruch 5, dadurch gekennzeichnet, daß der Ventilkörper (16) an seinem dem Boden zugewandten Ende eine in eine Ausnehmung (17) des kolbentragenden Zapfens (9) hineinragende Schulter (18) aufweist, die unter Zwischenschaltung einer Dichtung (19) gegen die benachbarte Stirnwand der Scheibe (14) anliegt, und das andere Ende (20) des Ventilkörpers (16) eine zur Scheibe (14) hingerichtete Schulter zur Abstützung einer Druckfeder (21) aufweist, die mit ihrem anderen Ende gegen die benachbarte Stirnseite der Scheibe (14) anliegt.

7. Schwingungsdämpfer nach Anspruch 6, dadurch gekennzeichnet, daß die Druckfeder (21) als kegelstumpfförmige Schraubenfeder ausgebildet ist, deren größere Basis gegen die benachbarte Stirnseite der Scheibe (14) anliegt.

8. Schwingungsdämpfer nach Anspruch 6 oder 7, dadurch gekennzeichnet, daß die Ausnehmung (18) des kolbentragenden Zapfens (9) über einen seitlichen Durchbruch (22) mit dem deckelseitigen Arbeitsraum (6) in offener Verbindung steht.

9. Schwingungsdämpfer nach Anspruch 6 oder 7, dadurch gekennzeichnet, daß die Ausnehmung des kolbentragenden Zapfens über einen zentralen Durchbruch mit dem bodenseitigen Arbeitsraum in offener Verbindung steht.

**Claims**

1. Two-tube vibration damper capable of taking guiding forces, especially for motor vehicles having wheels carried on suspension struts, comprising a housing having a base-end closure and a cover-end closure having a bearing for a piston rod and through which the piston rod passes, a working cylinder filled with hydraulic fluid and having openings in the neighbourhood of the base end closure, an intermediate wall closing off the working cylinder and having the piston rod passing through it and sealed with respect to the piston rod, a supporting tube around the piston rod and arranged between the cover-end closure and the intermediate wall and a working piston which is longitudinally slidable in the working cylinder and is secured on the end of the piston rod, the piston dividing the working cylinder into a cover-end working chamber and a base-end working chamber and producing damping forces in the cylinder, a compensating chamber being formed between the cylinder and the supporting tube on the one hand and the housing on the other hand and being filled at least from the base-end closure up to the intermediate wall with hydraulic fluid and above it with gas, characterised in that, the piston rod (2) is of hollow form, known in itself, and in the region of that end of it which is nearer the base-end closure there is provided a valve (8) which can be actuated to open it from outside through the hollow interior (3) of the piston rod, this valve controlling a flow path between the hollow interior (3) of the piston rod and one of the two working chambers (6, 7).

2. Damper according to Claim 1, characterised in that, the valve (8) is capable of being operated by a rod-like tool or the like for bleeding hydraulic fluid from the hollow interior (3) of the piston rod.

3. Damper according to Claim 1 or 2, characterised in that, the valve (8) is capable of automatic operation by the compressed gas for filling compressed gas into the damper through the hollow interior (3) of the piston rod, a compressed gas connection being provided on that end of the piston rod (2) which is nearer the cover-end closure.

4. Damper according to one of Claims 1 to 3, characterised in that, the valve (8) is, with regard to the base-end closure, mounted above a piston-carrying insert (9) secured in the hollow interior (3) of the piston rod (2) at that end of the latter which is nearer to the base-end closure.

5. Damper according to Claim 4, characterised in that, the valve (8) includes a disc (14) having a central valve seating (12) and preferably sealed at its periphery to the wall of the piston rod, the disc being rigidly clamped between the adjacent face of the piston-carrying insert (9) on the one hand and an inclined shoulder (15) on the wall of the piston rod on the other hand, and the central valve seating (12) having a pre-loaded valve member (16) passing through it.

6. Damper according to Claim 5, characterised in that, the valve member (16) has a shoulder (18) on that end of it which is towards the base-end closure, this shoulder projecting into a recess (17) in the piston-carrying insert (9), and the shoulder engaging the adjacent face of the disc (14) with the interposition of a seal (19), and the other end (20) of the valve member (16) having a shoulder facing towards the disc (14) for forming an abutment for a compression spring (21) of which the other end engages against the adjacent face of the disc (14).

7. Damper according to Claim 6, characterised in that, the compression spring (21) is in the form of a frusto-conical helical spring of which the larger end engages the adjacent face of the disc (14).

8. Damper according to Claim 6 or 7, characterised in that, the recess (18) in the piston-carrying insert (9) is in open communication with the cover-end working chamber (6) through a lateral opening (22).

9. Damper according to Claim 6 or 7, characterised in that, the recess in the piston-carrying insert is in open communication with the base-end working chamber through a central opening.

**Revendications**

1. Amortisseur d'oscillations à deux tubes absorbant les forces de guidage, notamment pour véhicules automobiles équipés de roues suspendues à des jambes de suspension, composé d'un corps qui est fermé par un fond et par un couvercle traversé par une tige de piston et présentant une portée pour la tige de piston, un cylindre de travail rempli d'huile, et présentant des ouvertures dans la région du fond, une cloison intermédiaire, qui ferme le cylindre de travail, est traversée par la tige de piston et montée à joint étanche sur cette tige, un tube support entourant la tige de piston et disposé entre le couvercle et la cloison intermédiaire, et un piston de travail mobile en translation longitudinale dans le cylindre de travail, fixé à l'extrémité de la tige de piston et qui divise le cylindre de travail en une chambre de travail côté couvercle et une chambre de travail côté fond et engendre les forces d'amortissement dans le cylindre de travail, une chambre de compensation remplie d'huile et de gaz au-dessus, au moins depuis le fond jusqu'à la cloison intermédiaire, étant formée entre le cylindre de travail et le tube support d'une part et le corps d'autre part, caractérisé en ce que la tige de piston (2) est de configuration creuse, d'une façon connue en soi et que, dans la région de son extrémité côté fond, est prévue une soupape (8) qui peut être actionnée de l'extérieur dans le sens de l'ouverture, à travers la cavité (3) de la tige de piston, et qui obture un passage d'écoulement entre la cavité (3) de la tige de piston et l'une des deux chambres de travail (6, 7).

2. Amortisseur d'oscillations selon la revendication 1, caractérisé en ce que la soupape (8) peut être actionnée au moyen d'une tige de montage ou équivalent, pour laisser de l'huile s'écouler dans la cavité (3) de la tige de piston.

3. Amortisseur d'oscillations selon la revendication 1 ou 2, caractérisé en ce que, pour charger l'amortisseur de gaz comprimé, la soupape (8) peut être actionnée par le gaz comprimé lui-même, en passant par la cavité (3) de la tige de piston, un raccord de gaz comprimé étant prévu à l'extrémité côté couvercle de la tige de piston (2).

4. Amortisseur d'oscillations selon l'une des revendications 1 à 3, caractérisé en ce que la soupape (8) est montée en amont, relativement à l'extrémité côté fond, d'un embout support de piston (9) fixé à l'extrémité côté fond de la tige de piston (2) dans la cavité (3) de cette tige.

5. Amortisseur d'oscillations selon la revendication 4, caractérisé en ce que la soupape (8) comprend un disque (14) muni d'une ouverture de soupape centrale (12), de préférence monté à joint étanche à sa périphérie contre la paroi de la tige de piston, qui est bloqué rigidement entre la face frontale adjacente de l'embout support de piston (9) d'une part, et un épaulement oblique (15) de la paroi de la tige de piston, d'autre part, l'ouverture centrale (12) de la soupape étant traversée par un élément mobile (16) de la soupape soumis à une précontrainte.

6. Amortisseur d'oscillations selon la revendication 5, caractérisé en ce qu'à son extrémité dirigée vers le fond, l'élément mobile (16) de la soupape présente un épaulement (18) qui fait saillie dans un évidement (17) de l'embout support de piston (9) et qui est appuyé contre la paroi radiale adjacente du disque (14) avec interposition d'une garniture d'étanchéité (19), l'autre extrémité (20) de l'élément mobile (16) de la soupape présentant un épaulement dirigé vers le disque (14) pour donner appui à un ressort de compression (21) qui s'appuie par son autre extrémité contre la face radiale adjacente du disque (14).

7. Amortisseur d'oscillations selon la revendication 6, caractérisé en ce que le ressort de compression (21) est constitué par un ressort hélicoïdal tronconique dont la grande base est appuyée contre la face frontale adjacente du disque (14).

8. Amortisseur d'oscillations selon la revendication 6 ou 7, caractérisé en ce que l'évidement (17) de l'embout support de piston (9) est en communication libre avec la chambre de travail côté couvercle (6) par l'intermédiaire d'une ouverture latérale (22).

9. Amortisseur d'oscillations selon la revendication 6 ou 7, caractérisé en ce que l'évidement de l'embout support de piston est en communication libre avec la chambre de travail côté fond par l'intermédiaire d'une ouverture centrale.